# EUROPÄISCHE PATENTANMELDUNG

(11) **EP 1 481 582 A1**
(43) Veröffentlichungstag der Anmeldung: **01.12.2004**
(21) Anmeldenummer: 03076583.8
(22) Anmeldetag: 26.05.2003
(51) Int. Cl.: A01F 15/07

(54) **Vorrichtung zum Umhüllen von Rundballen**

(71) Anmelder: Lely Enterprises AG, 6300 ZUG (CH)
(72) Erfinder: Lühr, Kord Hinrich, 38302 Wolfenbüttel (DE); Ehrenpfort, Uwe Wiechart, 38300 Wolfenbüttel (DE)
(74) Vertreter: Corten, Maurice Jean F.M.

(57) **Zusammenfassung**

Die Erfindung betrifft eine Vorrichtung (1) zum Umhüllen von Rundballen (17) aus landwirtschaftlichen Erntegütern mit Folie, umfassend einen an eine Rundballenpresse anbaubaren Grundrahmen (2) mit einem antreibbaren Wickeltisch (5) für einen Rundballen (17) und wenigstens eine rotierend antreibbare Wickeleinrichtung (8), welche wenigstens eine Folienrolle (10) trägt. Um die Vorrichtung (1) hinsichtlich des Einsatzbereiches zu verbessern, wird erfindungsgemäß vorgeschlagen, dass an der Vorrichtung (1) zusätzliche Mittel (11 bis 16, 18) vorgesehen sind, so dass die von der Rundballenpresse abgekuppelte Vorrichtung (1) stationär mit Rundballen (17) beschickbar ist.

## Beschreibung

Die Erfindung betrifft eine Vorrichtung nach dem Oberbegriff des Patentanspruches 1.

Die vorstehend beschriebene Vorrichtung, von der die Erfindung ausgeht, lässt sich der DE 198 06 460 C1 entnehmen. Hierbei ist die Vorrichtung zum Umhüllen wahlweise in Kombination mit einer Rundballenpresse im zusammengekuppelten Zustand oder als Einzelgerät betreibbar, welches über einen Adapter an die Dreipunkt-Hebevorrichtung eines Schleppers ankuppelbar ist. In beiden Fällen erfolgt das Einwickeln der Ballen direkt auf dem Feld nach dem Ballenausstoß aus der Rundballenpresse.

Ein anderes Verfahren sieht vor, dass die Ballen ohne Umhüllung erst an ihren endgültigen Lagerort transportiert und dann dort mit Folie umhüllt werden. Durch den Prospekt "Kverneland UN 7500 Rundballenwickler" Druckvermerk UN 121570 3000 6.99 Bryne Offset, sind beispielsweise mit den Typen 7554, 7576 und 7578 stationäre Wickelvorrichtungen bekanntgeworden, die am Lagerort mit dem Frontlader beschickt werden. Diese Vorrichtungen arbeiten nach dem Drehtischprinzip, d.h. der Ballen wird auf dem Drehtisch während des Umhüllens gleichzeitig um seine horizontale Zylinderachse und um eine vertikale Achse gedreht, während die Folienrolle ortsfest angeordnet ist. Die Geräte sind während des stationären Betriebes an der Dreipunkt-Hebevorrichtung angekuppelt und nicht in Kombination mit einer Rundballenpresse betreibbar.

Der Erfindung liegt die Aufgabe zugrunde, die eingangs beschriebene Vorrichtung hinsichtlich des Einsatzbereiches mit einfachen Mitteln zu verbessern.

Ausgehend von der eingangs beschriebenen Vorrichtung wird diese Aufgabe dadurch gelöst, dass an der Vorrichtung zusätzliche Mittel vorgesehen sind, so dass die von der Rundballenpresse abgekuppelte Vorrichtung stationär mit Rundballen beschickbar ist. Hinsichtlich der weiteren Ausgestaltung der Erfindung wird auf die Ansprüche 2 bis 17 verwiesen.

Auf diese Art und Weise lassen sich nunmehr mit einer sehr einfachen und kostengünstigen Erweiterung der vorhandenen Umhüllvorrichtung alle Kundenwünsche ohne zeitaufwendige Umrüstarbeiten unmittelbar erfüllen. Wird mit der Rundballenpresse nur gepresst, kann die Vorrichtung zum Umhüllen am Lagerort verbleiben und dort gleichzeitig stationär Ballen einwickeln.

Eine konstruktiv besonders einfache Ausführungsform wird dann erreicht, wenn die Mittel eine Ladeeinrichtung nach den Merkmalen der Ansprüche 2 bis 11 sowie 14 und 15 umfassen. Die Ladeeinrichtung ist durch einen einfachen Anund Abbau ohne Änderungen an der Umhüllvorrichtung auch später nachrüstbar und kann in ihrer Transportstellung auch bei angekuppelter Umhüllvorrichtung an die Rundballenpresse von einem Einsatzort zum anderen mitgenommen werden. Alternativ kann die Ladeeinrichtung zum Transport mittels eines Adapters an die Dreipunkt-Hebevorrichtung eines Schleppers gebaut werden. Die Beschickung der Ladeeinrichtung kann von der Seite oder auch in Abrollrichtung des Ballens erfolgen.

Eine andere Ausführungsform ist dadurch gekennzeichnet, dass die Ladeeinrichtung als antreibbare Hubeinrichtung ausgestaltet ist, welche den Ballen direkt auf den Wickeltisch befördert. Hierzu kann beispielsweise ein bereits bei Umhüllvorrichtungen bekannter Hubbügel (Übergabevorrichtung von Rundballenpresse an Umhüllvorrichtung) verwendet werden, auf die der Rundballen beispielsweise mit einem Frontlader gelegt wird.

Grundsätzlich ist es aber auch bei kleineren Ballendurchmessern möglich, einen Rundballen mit einem Frontlader direkt auf einen Wickeltisch zu legen, wenn der Wickeltisch zum Beladen in eine gegenüber seiner horizontalen Wickel-Arbeitsstellung nach unten geneigte Kippstellung verstellbar ist, welche durch geeignete Mittel vorbestimmbar ist, z.B. einstellbare Sensoren, vorprogrammierbare Postitionen oder verstellbare Anschläge.

Anhand der Zeichnung wird ein Ausführungsbeispiel des Erfindungsgegenstandes erläutert. Es zeigen:
Fig. 1 eine schematische Seitenansicht einer Vorrichtung zum Umhüllen mit in Arbeitsposition befindlicher Ladeeinrichtung während des stationären Betriebes;
Fig. 2 einen Querschnitt durch die Ladeeinrichtung gemäß der Linie A-A in Figur 1;
Fig.3 eine schematische Seitenansicht einer Vorrichtung zum Umhüllen mit in Transportstellung befindlicher Ladeeinrichtung und
Fig. 4 einen Querschnitt durch die Ladeeinrichtung mit eingeschwenkten seitlichen Führungen gemäß der Linie B-B in Figur 3.

Hinsichtlich des Aufbaus und der Wirkungsweise einer bekannten, an eine Rundballenpresse anbaubaren Vorrichtung zum Umhüllen von Ballen aus landwirtschftlichen Halmgütern mit Folie kann z.B. auf das deutsche Patent Nr.: 198 06 460 und auf die europäischen Patentanmeldung Nr.:EP 1266562 A1 verwiesen werden. Von einer derartigen Kombination ist in den Zeichnungen nur die Vorrichtung 1 zum Umhüllen ohne die Rundballenpresse dargestellt.

Die Umhüllvorrichtung 1 besitzt einen Grundrahmen 2 mit Anschlusselementen 3 zum Anbau an eine Rundballenpresse. Die Umhüllvorrichtung 1 besteht im wesentlichen aus einem um eine Schwenkachse 4 kippbaren Wickeltisch 5 mit antreibbaren Förderelementen 6, welche den Ballen tragen und drehen und aus einem um eine vertikale Achse 7 rotierend antreibbaren Dreharm 8, welcher an einem Kopfteil 9 des Grundrahmens 2 angeordnet ist und eine Folienrolle 10 trägt.

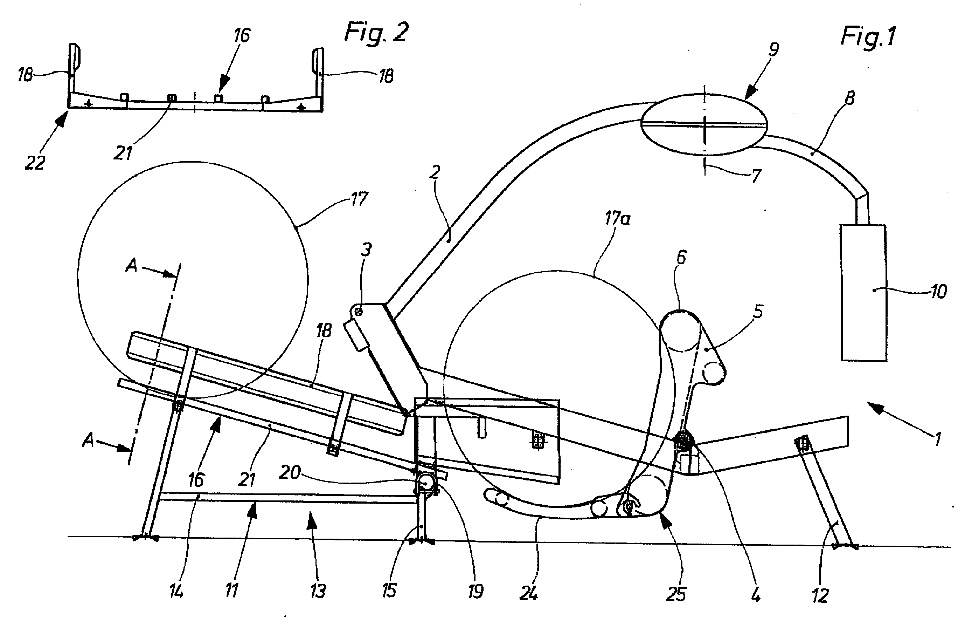

Für den stationären Betrieb der Umhüllvorrichtung 1 ist anstelle der Rundballenpresse eine Ladeeinrichtung 11 vorgesehen, die beispielsweise durch einen Frontlader mit Ballen beschickt wird. Während des stationären Betriebes stützt sich die Umhüllvorrichtung 1 über Standfüße 12, 15 auf dem Erdboden ab, siehe in Figur 1 dargestellte Arbeitsposition 13 der Ladeeinrichtung 11.

Die Ladeeinrichtung 11 besitzt eine Rahmenstruktur 14, die unten vier Standfüße 15 aufweist und oben eine schiefe Ebene 16 besitzt, auf der ein Rundballen 17 zur Umhüllvorrichtung 1 rollt, wobei dieser von seitlichen Führungen 18 während der Abrollbewegung geführt wird. Auf beiden Seiten der Ladeeinrichtung 11 sind verriegelbare, U-förmige Laschen 19 angeordnet, die ein Querrohr 20 des Grundrahmens 2 umgreifen, so dass die Ladeeinrichtung 11 in horizontaler Richtung fest mit der Umhüllvorrichtung 1 verbunden, jedoch um das Querrohr 20 verschwenkbar ist.

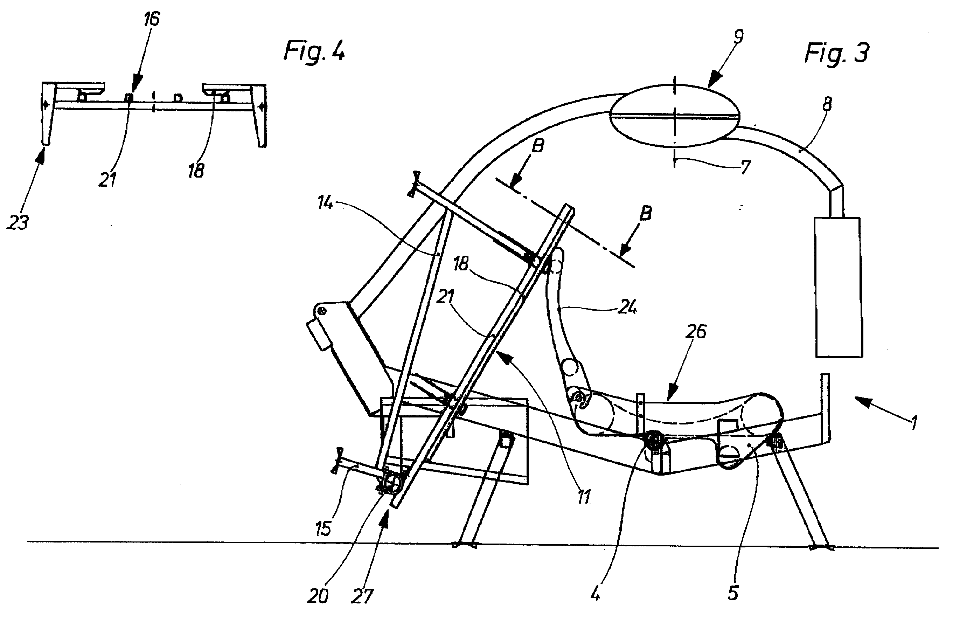

Wie aus Figur 2 ersichtlich, wird die schiefe Ebene 16 von im Abstand nebeneinander angeordneten Führungen 21 gebildet, die z.B. Rohre oder Rechteckprofile sein können. Die seitlichen Führungen 18 sind in einem Abstand voneinander angeordnet, der etwas größer ist als die Ballenbreite. Zur Verringerung der Breite können die seitlichen Führungen 18 aus ihrer in Figur 1 und 2 gezeigten Arbeitsstellung 22 in eine in Figur 3 und 4 gezeigte Transportstellung 23 verstellt werden.

Bei dem in Figur 1 gezeigten Ausführungsbeispiel ist dem Wickeltisch 5 eine schwenkbare Ballenhalteeinrichtung 24 zugeordnet. Die Ballenhalteeinrichtung 24 dient zur Aufnahme und zum Halten des Ballens während der Verschwenkung des Wickeltisches 5 aus seiner in Figur 1 gezeichneten Kippstellung 25 zur Ballenaufnahme in eine horizontale Wickel-Arbeitsstellung 26 des Wickeltisches 5, die der in Figur 3 gezeichneten Position des Wickeltisches 5 entspricht. Aufbau und Funktion der Ballenhalteeinrichtung 24 sind im Detail der EP 1266561 A1 entnehmbar.

Zunächst wird der Rundballen 17 z.B. mittels eines Frontladers auf die Ladeeinrichtung 11 gelegt. Aufgrund seines Eigengewichtes rollt der Rundballen 17 entlang der schiefen Ebene 16 gegen den Wickeltisch 5 in eine Position 17a. Nach Kippen des Wickeltisches (5) in eine horizontale Wickel-Arbeitsstellung 26 und Absenken der Ballenhalteeinrichtung 24 in eine horizontale Lage kann der Umhüllungsvorgang beginnen. Der fertig umhüllte Rundballen wird durch Schwenken des Wickeltisches (5) im Uhrzeigersinn vom Wickeltisch 5 entladen.

Für den flexiblen Einsatz der Umhüllvorrichtung 1 an verschiedenen Orten kann diese auf besonders einfache Weise in eine in Figur 3 gezeigte Transportposition 27 um das Querrohr 20 verschwenkt werden, nachdem die seitlichen Führungen 18 in die in Figur 4 gezeichnete Transportstellung 23 verstellt wurden. Nach Ankupplung der Umhüllvorrichtung 1 an eine Rundballenpresse oder einen Schlepper kann zum Einsatzort gefahren werden. Alternativ kann die Ladeeinrichtung 11 auch nach Entriegelung der Laschen 19 von der Umhüllvorrichtung 1 leicht abgenommen werden, wenn kein separater Einsatz der Rundballenpresse oder der Umhüllvorrichtung 1 absehbar ist. Nach Anbau an die Dreipunkt-Hebevorrichtung eines Schleppers kann die Ladeeinrichtung 11 auch separat transportiert werden.

Im Rahmen der Erfindung ist es auch möglich, einen Wickeltisch 5 in horizontaler Wickel-Arbeitsstellung 26 mit einer antreibbaren Ladeeinrichtung, z.B. Hubbügel zu beladen, auf den der Ballen vorher beispielsweise mit einem Frontlader gelegt wurde.

Alternativ können insbesondere Ballen mit kleinerem Durchmesser auch direkt auf den Wickeltisch 5 gelegt werden, wenn der Wickeltisch 5 um einen durch geeignete Mittel voreinstellbaren Winkel angekippt wurde, so dass genügend Freiraum zwischen Kopfteil 9 der Umhüllvorrichtung 1 und Wickeltisch 5 zum Laden vorhanden ist. Geeignete Mittel können beispielsweise verstellbare Sensoren, vorprogrammierbare Positionen, verstellbare Anschläge o. ä. sein. Gegebenenfalls sind zusätzliche Haltemittel notwendig, um ein Herabrollen des Ballens vom Wickeltisch 5 zu vermeiden.

Die Erfindung lässt sich gleichermaßen auch anwenden bei Umhüllvorrichtungen, bei denen die Folienrolle (10) den Ballen (17) mittels einer nicht dargestellten Führungseinrichtung um eine horizontale Drehachse umkreist. Aufbau und Wirkungsweise sogenannter "Horizontalwickler" sind beispielsweise in der WO 02/076184 A1 näher dargestellt und beschrieben.

## Patentansprüche

1. Vorrichtung (1) zum Umhüllen von Rundballen (17) aus landwirtschaftlichen Erntegütern mit Folie, umfassend einen an eine Rundballenpresse anbaubaren Grundrahmen (2) mit einem antreibbaren Wickeltisch (5) für einen Rundballen (17) und wenigstens eine rotierend antreibbare Wickeleinrichtung (8), welche wenigstens eine Folienrolle (10) trägt, **dadurch gekennzeichnet, dass** an der Vorrichtung (1) zusätzliche Mittel (11 bis 16, 18) vorgesehen sind, so dass die von der Rundballenpresse abgekuppelte Vorrichtung (1) stationär mit Rundballen (17) beschickbar ist.

2. Vorrichtung nach Anspruch 1, **dadurch gekennzeichnet, dass** die Mittel eine Ladeeinrichtung (11) für wenigstens einen Rundballen (17) umfassen.

3. Vorrichtung nach Anspruch 2, **dadurch gekennzeichnet, dass** die Ladeeinrichtung am Grundrahmen (2) oder am Wickeltisch (5) angeordnet ist.

4. Vorrichtung nach Anspruch 2 oder 3, **dadurch gekennzeichnet, dass** die Ladeeinrichtung (11) an- und abbaubar ausgestaltet ist.

5. Vorrichtung nach einem der vorhergehenden Ansprüche 2 bis 4, **dadurch gekennzeichnet, dass** die Ladeeinrichtung (11) um eine horizontale Achse (20) schwenkbar ist.

6. Vorrichtung nach einem oder mehreren der vorhergehenden Ansprüche, **dadurch gekennzeichnet, dass** die Ladeeinrichtung (11) Ballenführungen (18, 21) aufweist.

7. Vorrichtung nach Anspruch 6, **dadurch gekennzeichnet, dass** die Führungen (21) so ausgebildet sind, dass diese in einer Arbeitsposition (13) der Ladeeinrichtung (11) eine schiefe Ebene (16) bilden, auf der der Rundballen (17) zum Wickeltisch (5) rollt.

8. Vorrichtung nach Anspruch 6 oder 7, **dadurch gekennzeichnet, dass** seitliche Führungen (18) für den Rundballen (17) vorgesehen sind.

9. Vorrichtung nach Anspruch 8, **dadurch gekennzeichnet, dass** die seitlichen Führungen (18) zur Verringerung der Breite einschwenk- oder einschiebbar sind.

10. Vorrichtung nach einem oder mehreren der vorhergehenden Ansprüche, **dadurch gekennzeichnet, dass** die Ladeeinrichtung (11) so in eine Transportposition (27) bringbar ist, dass die Vorrichtung (1) an eine Rundballenpresse oder einen Schlepper kuppelbar ist.

11. Vorrichtung nach einem oder mehreren der vorhergehenden Ansprüche, **dadurch gekennzeichnet, dass** die Ladeeinrichtung (11) Standfüße (15) aufweist, auf denen sich die Vorrichtung (1) während des stationären Betriebes abstützt.

12. Vorrichtung nach einem oder mehreren der vorhergehenden Ansprüche außer Anspruch 7, **dadurch gekennzeichnet, dass** die Ladeeinrichtung (11) als antreibbare Hubeinrichtung ausgestaltet ist, welche den Rundballen (17) direkt auf den Wickeltisch befördert.

13. Vorrichtung nach einem oder mehreren der vorhergehenden Ansprüche, **dadurch gekennzeichnet, dass** der Wickeltisch (5) zum Beladen in eine gegenüber seiner horizontalen Wickel-Arbeitsstellung nach unten geneigte Kippstellung verstellbar ist.

14. Vorrichtung nach einem oder mehreren der vorhergehenden Ansprüche, **dadurch gekennzeichnet, dass** Mittel zur Fernsteuerung der Arbeitsvorgänge vorgesehen sind.

15. Vorrichtung nach einem oder mehreren der vorhergehenden Ansprüche, **dadurch gekennzeichnet, dass** die Energieversorgung vom Schlepper, einem separaten Energieerzeuger und/oder Speicher oder direkt oder indirekt aus dem Stromnetz erfolgt.

16. Vorrichtung nach einem oder mehreren der vorhergehenden Ansprüche, **dadurch gekennzeichnet, dass** die Wickeleinrichtung als ein um eine vertikale Drehachse (7) rotierender Dreharm (8) ausgestaltet ist.

17. Vorrichtung nach einem oder mehreren der vorhergehenden Ansprüche 1 bis 15, **dadurch gekennzeichnet, dass** die Folienrolle (10) den Rundballen (17) mittels einer Führungseinrichtung um eine horizontale Drehachse umkreist.
